# EUROPEAN PATENT SPECIFICATION

(11) **EP 1 997 738 B1**
(45) Date of publication and mention of the grant of the patent: **21.03.2012**
(21) Application number: 07010612.5
(22) Date of filing: 29.05.2007
(51) Int. Cl.: B65C 9/40, B65G 47/64

(54) **Packing and labelling process**
Verpackungs- und Etikettierverfahren
Procédé de conditionnement et étiquettage

(43) Date of publication of application: 03.12.2008
(73) Proprietor: E.I. DU PONT DE NEMOURS AND COMPANY, Wilmington, DE 19898 (US)
(72) Inventor: Demessemaeker, Bob, 9230 Wetteren-Massemen (BE)
(74) Representative: DuPont Performance Coatings Biering/Blum/Kimpel

(56) References cited:
- WO-A-2005/021410
- US-A- 4 431 104
- US-A- 5 078 255
- US-A- 5 342 461
- US-A- 6 152 284
- US-A1- 2004 099 379
- US-B1- 6 419 782

## Description

The invention relates to a packing process for packing a product and labelling the packages of the product.

US 4925002 discloses a sorting and distribution system for the handling of packages of documents or other items. The system includes an infeed conveyor in tandem with an inclined conveyor and a plurality of vertically adjustable conveyor divider plates positioned above the infeed and inclined conveyors to divide the conveying surfaces into a plurality of individual sorting lanes. The infeed and inclined conveyor belts have a plurality of longitudinal grooves therein which may be created by and are aligned with the divider plates which extend into said grooves. A conveyor end divider transition section positioned at the end of the inclined conveyor enables the conveyed materials to flow by means by gravity to a distribution transition section that includes a chute for each lane of conveyed materials. The distribution transition section provides for the optimum conveying angle for gravity flow of the conveyed materials and also provides the necessary direction changes to distribute the materials to the desired discharge chute. A plurality of discharge chutes receive the conveyed materials at the end of the distribution transition section and discharges the conveyed materials into receptacles.

FR 2548149 discloses a sorting and distribution system having a frame with at least two series of parallel, horizontal, continuous conveyor belts stacked one above the other. Each belt is edged laterally by vertical dividers fixed to the structure. A spring-load lever at the end of each belt retains the products until activated by an electro-magnet. Each belt is also fitted with a product retention roller, spring-loaded on pivots above the belt. Shafts with slightly concave, enlarged diameter sections tension the belts which are motor driven, via a bevelled crown wheel and pinion, either independently or by a common shaft. The system is used in the field of storage and dispensing of pharmaceutical or dietary products.

US 6 419 782 discloses an automatic label printing and application system and a corresponding process. The system does not include a specific distribution system.

WO 2005/021410 discloses a conveyer system with two supply conveyers, two discharge conveyers and transfer means. The transfer means include two movable/adjustable transfer conveyers on the upper level adjacent to each other and two moveable/adjustable transfer conveyers on the lower level adjacent to each other. Each of the movable/adjustable transfer conveyers has an adjustable end adjacent to the other transfer conveyer. One adjustable transfer conveyer is connected on one side with one supply conveyer and a second adjustable transfer conveyer is connected with one discharge conveyer, whereby the first upper level conveyor may be connected to the second upper level conveyor or to the second lower level conveyor and the first lower level conveyor may be connected to the second lower level conveyor or to the second upper level conveyor.

In paint industries paints are filled in cans or bottles by filling machines after production of paints. A filling machine fills a paint in a can or a bottle and closes the can or bottle. A belt transports the cans or bottles from the filling machine to a labelling machine. The function of the labelling machine is to apply labels, e.g., adhesive labels to randomly arriving packages on a conveyor belt.

If the size of packages like cans or bottles changes, it is necessary to adapt the filling machine and the labelling machine to the new size of the packages. In such cases, it is necessary to stop the process of packing. As a rule, it will take about 15 minutes in order to adapt a conventional filling machine to a new size of a can or a bottle and it will take about four hours in order to adapt a conventional labelling machine to a new can or bottle size. As a result, it is necessary to stop the process of packing for many hours. Due to economical reasons, it is of interest to reduce this time delay during the course of a packing process.

It is an object of the present invention to reduce the time delay during the process of packing and labelling of products. It is a further object of the invention to provide a sorting and distribution system especially for packing and labelling of products.

For these reasons, the invention refers to a process for packing a product and labelling the package of the product comprising the steps:
a) packing a product by at least two packing machines;
b) conveying the packages containing the product to a distribution system which is connected with different labelling machines;
c) conveying the packages from the distribution system to one of the labelling machines which is appropriate adapted to the size of the packages;
d) putting a label on the packages by the appropriate labelling machine,
whereby the distribution system comprises at least two section belts which are one above each other and connection belts having adjustable ends adjacent to the section belts for connecting every section belt with one infeed or outfeed belt,
whereby the packages are conveyed with infeed belts from the at least two packing machines to the corresponding section belt of the distribution system and whereby the packages are transported with outfeed belts from every section belt to a corresponding appropriate labelling machine.

The process comprises at least two packing machines and corresponding infeed belts which connect every packing machine with one section belt of the distribution system for conveying a package from a packing machine, especially from a filling machine to the corresponding section belt whereby every package is transported from every section belt to a corresponding appropriate labelling machine.

The section belts are arranged one above each other.

Every package is transported from a section belt to an outfeed belt by a connection belt having an adjustable end adjacent to the section belt.

In an embodiment of the process, every package is transported from an infeed belt to a section belt by a connection belt having an adjustable end adjacent to the section belts.

In a further embodiment of the process, the packages are cans.

In a further embodiment of the process, the packages are filled with paints.

A distribution system suitable for carrying out the process comprises at least two section belts which are one above each other and connection belts having adjustable ends adjacent to the section belts for connecting every section belt with one infeed or outfeed belt.

In the invention, the section belts are connected with packing machines, especially filling machines on one side and with labelling machines on the other side.

In an embodiment of the invention, the distribution system comprises top rails attached to the connection belts.

In a further embodiment of the invention, the height of a top rail above the corresponding connection belt is adjustable.

In a further embodiment of the invention, the belts of the connection belts are made of plastic.

In a further embodiment of the invention, the belts of the section belts are made of steel.

In a further embodiment of the invention, guiding rails are attached to the section belts.

In a further embodiment of the invention, the guiding rails are adjustable.

In a further embodiment of the invention, the section belts are shifted collaterally. To rotate a connection belt from a first section belt to a second or third section belt may lead to gap between the connection belt and a section belt, if the section belts are not shifted collaterally. Thus, the section belts may be shifted collaterally in order to avoid such gaps for example.

In order to reduce the time delay during packing and labelling of a product, at least two labelling machines are used, for example three, four five or six labelling machines. Of course, a higher number of labelling machines is possible, for example ten labelling machines are also possible. A first labelling machine is able to put a label on a package having a first size. A second labelling machine is able to put a label on a package having a second size and so on. In other words, a first labelling machine is able to put a label on a first package. A second labelling machine is able to put a label on a second package whereby the size of the second package differs from the size of the first package and so on. Additionally, there is a distribution system connected with one or more packing machines like filling machines on one side and with the different labelling machines on the other side. Every labelling machine is connected with the distribution system by an own outfeed belt. The function of the distribution system is to convey the packed product (for example a can or a bottle filled with a product like a paint) to the appropriate labelling machine which is able to put a label on the package. If the size of a package changes, the distribution system has only to convey the package having a new size to another appropriate labelling machine via the appropriate outfeed belt. For this reason, it is not necessary to stop the process for a lot of hours in order to rearrange a labelling machine.

A change of a product may be a further reason for conveying a package to another labelling machine in order to save time. If one of the labelling machines is prepared to put the new corresponding label on the package containing a new product (for example a red paint instead of a green paint), it is only necessary to convey the package to the other labelling machine in order to put the appropriate label on the package.

There are at least two packing machines connected with the distribution system. There are for example three, four, five, six or ten packing machines. Every filling respectively packing machine is connected with the distribution system by an own infeed belt. As a consequence, it is possible to convey different packages of different sizes to the distribution system at the same time. As a further consequence, it is possible to use all or at least most of the labelling machines at the same time and as a consequence it is possible to avoid a standstill of some or most of the labelling machines.

In order to handle packages of different sizes at the same time, the distribution system comprises at least two different sections. There are for example three, four, five, six or ten different sections. The function of every section is to obtain a package from a packing machine, for example from a filling machine and to convey the package to the appropriate labelling machine depending on the size of the package. In other words, a first section of the distribution system receives a package having a first size from a first filling machine and conveys the package to an appropriate first labelling machine. A second section of the distribution system receives a package having a second size from a second filling machine and conveys the package to an appropriate second labelling machine and so on. If the size of the packages coming from the first packing machines changes, it is only necessary to rearrange the corresponding section in order to convey the packages having a new size to another appropriate labelling machine. The necessary rearrangement of a section takes only a few minutes. A section may comprise belts in order to transport the packages. However, it is possible to use other transport means.

To place at least two sections side by side consumes a great area for example of a production hall. In order to provide a space-saving distribution system, sections belts of the sections or other transport means are preferably placed above each other. It is additional possible that the sections are shifted collaterally. Such an embodiment may be of advantage in order to avoid gaps between for example section belts and for example connection belts. However, if there is such a shift, the shift should be small in order to avoid consumption of base.

Further embodiments, details and advantages of the invention are explained by the following examples.

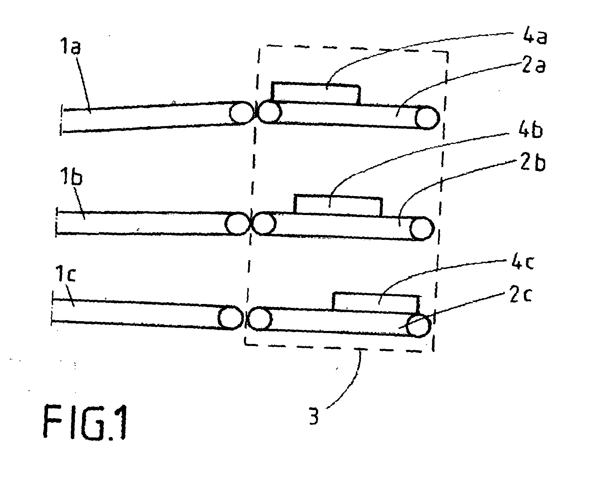

Fig. 1 is a sectional view of three infeed belts 1 a, 1 band 1 c attached at three different sections of a distribution system 3. Every section comprises a belt 2a, 2b, 2c and a guiding rail 4a, 4b and 4c. The section belts 2a, 2b and 2c transport the packages coming from the infeed belts to the outfeed belts. The outfeed belts transport the packages to the labelling machines. The function of the guiding rails 4a, 4b, 4c is to guide a package coming from an infeed belt to the appropriate outfeed belt. For this reason, the guiding rails are adjustable in an embodiment of the invention preferably by hand in order to avoid an accident.

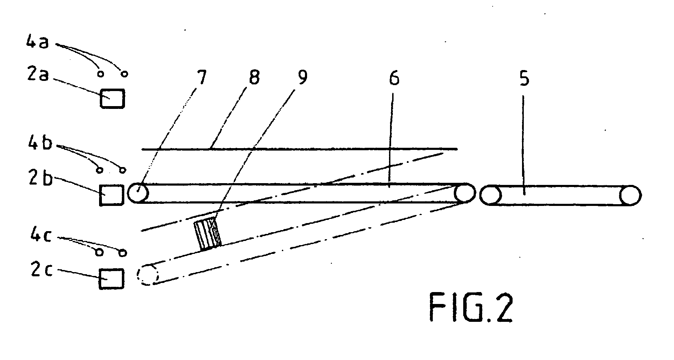

Fig. 2 is another sectional view of the embodiment according to fig. 1 showing the three section belts 2a, 2b and 2c as well as the corresponding guiding rails 4a, 4b and 4c. Fig. 2 shows one of three outfeed belts 5 leading to one labelling machine. In order to provide a connection to the appropriate section belt 2a, 2b or 2c, there are three connection belts 6. Fig. 2 shows one of the three connection belts. It is possible to move one end of every connection belt up and down, namely the end 7 which is next to the section belts 2a, 2b, 2c. Due to the adjustable ends, it is possible to change the connections between the section belts and the outfeed belts in order to convey a package to the appropriate labelling machine. For example, if it is necessary to connect the section belt 2c with the shown outfeed belt 5 due to a new size of packages arriving at section belt 2c, it is only necessary to lower the adjustable end 7 of the connection belt 6 according to the dotted view shown in fig. 2. If it is necessary to connect the section belt 2a with the shown outfeed belt 5 due to a new size of packages arriving at section belt 2a, it is only necessary to lift up the adjustable end 7 of the connection belt 6.

In one preferred embodiment of the invention, there is a top guide 8 attached at the connection belt 6. The top guide is situated above the connection belt. The height of the top guide is adjustable. The function of every top guide belonging to the three different connection belts 6 is to prevent for example a can 9 from falling down, especially when a connection belt 6 is inclined according to the dotted view in fig. 2. In order to prevent a can from falling down, it is necessary to adapt the height of the top rail to the height of the can 9.

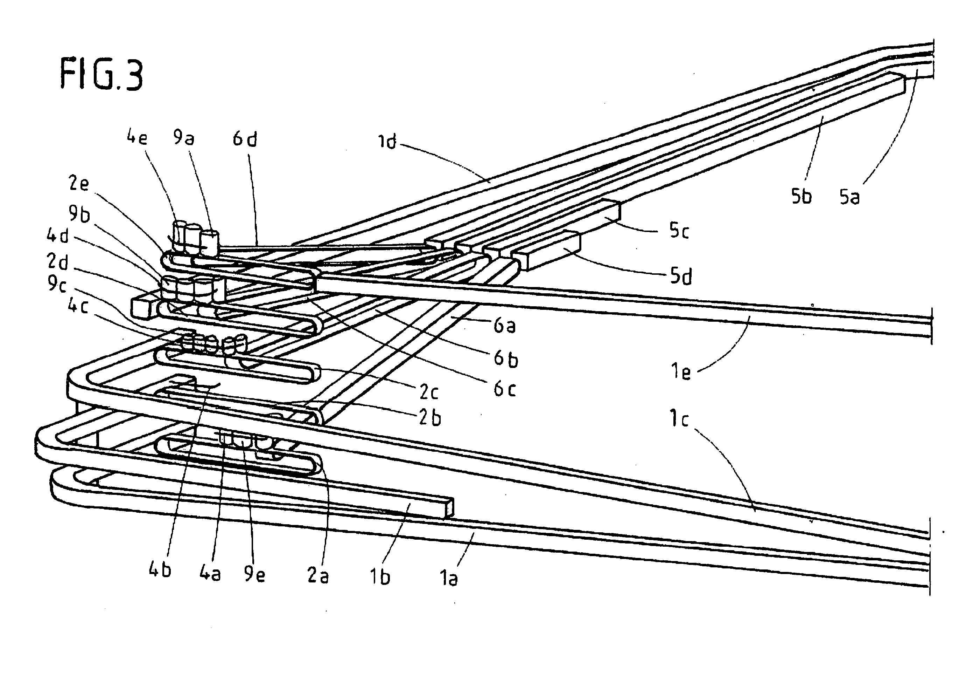

Fig. 3 shows a three-dimensional view of a further embodiment comprising five infeed belts 1a, 1b, 1c, 1d, 1e, five section belts 2a, 2b, 2c, 2d, 2e comprising guide rails 4a, 4b, 4c, 4d, 4e, four connection belts 6a, 6b, 6c, 6d and four outfeed belts 5a, 5b, 5c, 5d. There are five filling machines (not shown) and four labelling machines (not shown). Such an arrangement is of advantage, if there are four different sizes of cans 9a, 9b, 9c and 9e. It is of advantage that there is one additional filling machine in order to be in a position to rearrange one filling machine without stopping the labelling machines as well as the further four filling machines. Such an rearrangement may be necessary for example in order to change a colour of a paint. The section belts shown in fig. 3 are not shifted collaterally.

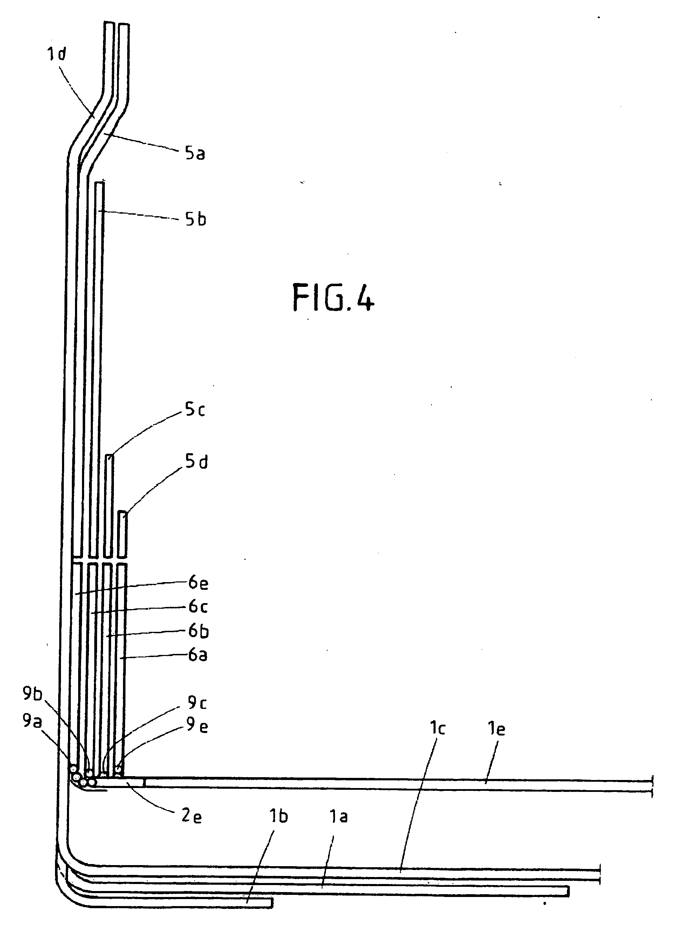

Fig. 4 shows a top view of the embodiment shown in fig. 3.

In the embodiments shown in figs. 1 to 4, it is necessary to have adjustable guiding rails in order to lead a can to the appropriate connection belt. If the connection belts are so arranged that the connection belts connects the infeed belts with the section belts, it is not necessary that the guiding rails are adjustable.

Typical sizes of cans for a paint range from 0,5 litre to five litres. If a belt is not or only hardly inclined, the belts are preferably made of steel for stability and abrasive reasons. Otherwise, it may be preferable that a belt is made of an appropriate artificial material in order to provide a high friction force between a package like a can and the corresponding belt. For this reason, especially the connection belts are made of an appropriate plastic material like polyurethane or PVC. The further advantages of these materials are that polyurethane or PVC are solvent resistant and that they are easy to clean.

If there are five section belts, a typical height of the distribution system for cans containing paints is about 2,70 metres. Such a distribution system does not consume a lot of space respectively base in a production hall.

## Claims

1. Process for packing a product and labelling the packages of the product comprising the steps:
a) packing a product by at least two packing machines;
b) conveying the packages (9a,9b, 9c, 9e) containing the product to a distribution system (3) which is connected with different labelling machines;
c) conveying the packages (9a, 9b, 9c, 9e) from the distribution system to one of the labelling machines which is appropriate adapted to the size of the packages (9a, 9b, 9c, 9e);
d) putting a label on the packages (9a, 9b, 9c, 9e) by the appropriate labelling machine,
whereby the distribution system comprises at least two section belts (2a, 2b, 2c, 2d, 2e) which are one above each other and connection belts (6, 6a, 6b, 6c, 6d) having adjustable ends (7) adjacent to the section belts for connecting every section belt with one infeed or outfeed belt,
whereby the packages are conveyed with infeed belts from the at least two packing machines to the corresponding section belt of the distribution system and whereby the packages are transported with outfeed belts from every section belt (2a, 2b, 2c, 2d, 2e) to a corresponding appropriate labelling machine.

2. Process according to claim 1, whereby the packages are transported from the at least two section belts (2a, 2b, 2c, 2d, 2e) to outfeed belts (5a, 5b, 5c, 5e) by connection belts (6, 6a, 6b, 6c, 6d) having an adjustable end (7) adjacent to the section belt.

3. Process according to claim 1, whereby the packages are transported from infeed belts to the at least two section belts by connection belts having an adjustable end adjacent to the section belts.

4. Process according to one of the preceding claims, whereby the packages are cans.

5. Process according to one of the preceding claims, whereby the packages are filled with paints.

6. Process according to one of the preceding claims, whereby the distribution system comprises top rails (8) attached to the connection belts.

7. Process according to claim 6, whereby the height of a top rail above the corresponding connection belt is adjustable.

8. Process according to one of the preceding claims, whereby the belts of the connection belts are made of plastic.

9. Process according to one of the preceding claims, whereby the belts of the section belts are made of steel.

10. Process according to one of the preceding claims, whereby guiding rails (4a, 4b, 4c, 4d, 4e) are attached to the section belts.

11. Process according to claim 10, whereby the guiding rails are adjustable.

12. Process according to one of the preceding claims, whereby the section belts (2a, 2b, 2c, 2d, 2e) are shifted collaterally.

## Patentansprüche

1. Verfahren für das Verpacken eines Produktes und Etikettieren der Verpackungseinheiten des Produktes, das die folgenden Schritte aufweist:
a) Verpacken eines Produktes mittels mindestens zwei Verpackungsmaschinen;
b) Transportieren der Verpackungseinheiten (9a, 9b, 9c, 9e), die das Produkt enthalten, zu einem Verteilungssystem (3), das mit verschiedenen Etikettiermaschinen verbunden ist;
c) Transportieren der Verpackungseinheiten (9a, 9b, 9c, 9e) vom Verteilungssystem zu einer der Etikettiermaschinen, die in geeigneter Weise an die Größe der Verpackungseinheiten (9a, 9b, 9c, 9e) angepasst ist;
d) Anbringen eines Etiketts auf den Verpackungseinheiten (9a, 9b, 9c, 9e) mittels der geeigneten Etikettiermaschine,
wobei das Verteilungssystem mindestens zwei Teilbänder (2a, 2b, 2c, 2d, 2e), die sich übereinander befinden, und Verbindungsbänder (6, 6a, 6b, 6c, 6d) mit verstellbaren Enden (7), benachbart den Teilbändern, für das Verbinden eines jeden Teilbandes mit einem Zufuhr- oder Entnahmeband aufweist,
wobei die Verpackungseinheiten mit den Zuführbändern von den mindestens zwei Verpackungsmaschinen zum entsprechenden Teilband des Verteilungssystems transportiert werden, und wobei die Verpackungseinheiten mit den Entnahmebändern von jedem Teilband (2a, 2b, 2c, 2d, 2e) zu einer entsprechenden geeigneten Etikettiermaschine transportiert werden.

2. Verfahren nach Anspruch 1, bei dem die Verpackungseinheiten von den mindestens zwei Teilbändern (2a, 2b, 2c, 2d, 2e) zu den Entnahmebändern (5a, 5b, 5c, 5e) mittels der Verbindungsbänder (6, 6a, 6b, 6c, 6d) mit einem verstellbaren Ende (7), benachbart dem Teilband, transportiert werden.

3. Verfahren nach Anspruch 1, bei dem die Verpackungseinheiten von den Zuführbändern zu den mindestens zwei Teilbändern mittels der Verbindungsbänder mit einem verstellbaren Ende, benachbart den Teilbändern, transportiert werden.

4. Verfahren nach einem der vorhergehenden Ansprüche, bei dem die Verpackungseinheiten Dosen sind.

5. Verfahren nach einem der vorhergehenden Ansprüche, bei dem die Verpackungseinheiten mit Farbe gefüllt sind.

6. Verfahren nach einem der vorhergehenden Ansprüche, bei dem das Verteilungssystem obere Schienen (8) aufweist, die an den Verbindungsbändern befestigt sind.

7. Verfahren nach Anspruch 6, bei dem die Höhe einer oberen Schiene über dem entsprechenden Verbindungsband verstellbar ist.

8. Verfahren nach einem der vorhergehenden Ansprüche, bei dem die Bänder der Verbindungsbänder aus Kunststoff bestehen.

9. Verfahren nach einem der vorhergehenden Ansprüche, bei dem die Bänder der Teilbänder aus Stahl bestehen.

10. Verfahren nach einem der vorhergehenden Ansprüche, bei dem die Führungsschienen (4a, 4b, 4c, 4d, 4e) an den Teilbändern befestigt sind.

11. Verfahren nach Anspruch 10, bei dem die Führungsschienen verstellbar sind.

12. Verfahren nach einem der vorhergehenden Ansprüche, bei dem die Teilbänder (2a, 2b, 2c, 2d, 2e) seitlich verschiebbar sind.

## Revendications

1. Procédé d'emballage d'un produit et d'étiquetage des emballages du produit, comprenant les étapes ci-dessous :
a) emballage d'un produit par l'intermédiaire d'au moins deux machines d'emballage ;
b) transport des emballages (9a, 9b, 9c, 9e) contenant le produit vers un système de distribution (3), raccordé à différentes machines d'étiquetage ;
c) transport des emballages (9a, 9b, 9c, 9e) du système de distribution vers l'une des machines d'étiquetage adaptée de manière appropriée à la taille des emballages (9a, 9b, 9c, 9e) ;
d) application d'une étiquette sur les emballages (9a, 9b, 9c, 9e) par l'intermédiaire de la machine d'étiquetage appropriée ;
le système de distribution comprenant au moins deux courroies de section (2a, 2b, 2c, 2d, 2e) agencées l'une au-dessus de l'autre, et des courroies de raccordement (6, 6a, 6b, 6c, 6d), comportant des extrémités ajustables (7) adjacentes aux courroies de section, pour raccorder chaque courroie de section à une courroie d'entrée ou une courroie de sortie ;
les emballages étant transportés par des courroies d'entrée des au moins deux machines d'emballage vers la courroie de section correspondante du système de distribution, les emballages étant transportés par des courroies de sortie de chaque courroie de section (2a, 2b, 2c, 2d, 2e) vers une machine d'étiquetage appropriée correspondante.

2. Procédé selon la revendication 1, dans lequel les emballages sont transportés des au moins deux courroies de section (2a, 2b, 2c, 2d, 2e) vers des courroies de sortie (5a, 5b, 5c, 5e) par des courroies de raccordement (6, 6a, 6b, 6c, 6d) comportant une extrémité ajustable (7) adjacente à la courroie de section.

3. Procédé selon la revendication 1, dans lequel les emballages sont transportés des courroies d'entrée vers les au moins deux courroies de section par des courroies de raccordement, comportant une extrémité ajustable adjacente aux courroies de section.

4. Procédé selon l'une des revendications précédentes, dans lequel les emballages sont des boîtes.

5. Procédé selon l'une des revendications précédentes, dans lequel les emballages sont remplis de peintures.

6. Procédé selon l'une des revendications précédentes, dans lequel le système de distribution comprend des rails supérieurs (8) fixés sur les courroies de raccordement.

7. Procédé selon la revendication 6, dans lequel la hauteur d'un rail supérieur au-dessus de la courroie de raccordement correspondante peut être ajustée.

8. Procédé selon l'une des revendications précédentes, dans lequel les courroies des courroies de raccordement sont composées de plastique.

9. Procédé selon l'une des revendications précédentes, dans lequel les courroies des courroies de section sont composées d'acier.

10. Procédé selon l'une des revendications précédentes, dans lequel des rails de guidage (4a, 4b, 4c, 4d, 4e) sont fixés sur les courroies de section.

11. Procédé selon la revendication 10, dans lequel les rails de guidage sont ajustables.

12. Procédé selon l'une des revendications précédentes, dans lequel les courroies de section (2a, 2b, 2c, 2d, 2e) sont déplacées de manière collatérale.
